# EUROPEAN PATENT SPECIFICATION

(11) **EP 2 140 655 B1**
(45) Date of publication and mention of the grant of the patent: **01.08.2012**
(21) Application number: 08735662.2
(22) Date of filing: 01.04.2008
(51) Int. Cl.: H04L 29/06

(54) **INTER-WORKING BETWEEN A PACKET-SWITCHED DOMAIN AND A CIRCUIT-SWITCHED DOMAIN**
INTERWORKING ZWISCHEN EINER PAKETVERMITTELTEN DOMÄNE UND EINER LEITUNGSVERMITTELTEN DOMÄNE
INTERFONCTIONNEMENT ENTRE UN DOMAINE À COMMUTATION DE PAQUETS ET UN DOMAINE À COMMUTATION DE CIRCUITS

(30) Priority: 04.04.2007 US 909966 P
(43) Date of publication of application: 06.01.2010
(73) Proprietor: Telefonaktiebolaget LM Ericsson (publ), 164 83 Stockholm (SE)
(72) Inventor: WITZEL, Andreas, 52134 Herzogenrath (DE); KELLER, Ralf, 52146 Würselen (DE); NAKADA, Kazuhiko, Tokyo 162-0816 (JP); ÅSTRÖM, BO, S-117 59 Stockholm (SE)
(74) Representative: von Zmuda-Trzebiatowski, Margarethe
(86) International application number: PCT/EP2008/053892
(87) International publication number: WO 2008/122549

(56) References cited:
- ERICSSON, NORTEL, ATT: "Registering IMS centralised users for service delivery when using CS access" 3GPP TSG SA WG2 ARCHITECTURE - S2-071335, [Online] 21 March 2007 (2007-03-21), pages 1-3, XP002509769 Retrieved from the Internet: URL:http://www.3gpp.org/ftp/tsg_sa/WG2_Arc h/TSGS2_56c-AH-Warsaw/Docs/S2-071335.zip> [retrieved on 2009-01-07]
- 3GPP TS SA WG2: "IP Multimedia System (IMS) centralised services (Release 8)" 3GPP TR 23.892 V0.4.0, [Online] March 2007 (2007-03), pages 1-36, XP002509768 Retrieved from the Internet: URL:http://www.3gpp.org/ftp/Specs/archive/ 23_series/23.892/23892-040.zip> [retrieved on 2009-01-07]

## Description

### Technical field

The present invention relates to a telecommunication solution for providing services via a packet-switched domain, such as IMS to a user with a circuit switched capable terminal being accessible via a circuit-switched domain, such as GSM.

### Background

Third Generation (3G) Networks such as UMTS (Universal Telecommunication Network) and CDMA 2000 provide high-speed wireless Internet access to mobile users based on a packet-switched technology.

A number of mobile communication networks, such as GSM, with a circuit-switched domain covering an access domain and a service domain are based on a circuit-switched technology.

Due to the fact that service providers shift their core network infrastructure from the circuit-switched domain to a consolidated common packet-switched infrastructure, the need occurs to enable a consistent provision of services to subscribers over a variety of accesses domains including circuit-switched CS and packet-switched PS accesses and different service domains.

Therefore common controlling platforms are introduced for providing enhanced services for the multitude of different access domains that may be available for an individual call. For the 3G networks the IP Multimedia Subsystem IMS, standardised by the Third Generation Partnership Project (3GPP), has been defined as a common controlling platform which supports voice and multimedia services, as examples of packet-switched services. The strength of IMS as an example of a packet-switched domain, is the provision of enhanced services over packet-switched technology, in particular over IP-network. The usage of IP-network as a single underlying standard allows an easy and fast service deployment.

A solution for consistently routing calls from a CS network access through the IMS network to the IMS service domain is currently investigated by the 3GPP. The work item is called IMS Centralized Services (ICS) and aims at moving all subscribers to the IMS for a harmonization of the service (3GPP TS 23.292 IP Multimedia System (IMS) centralized services(Release 8)).

The aim of the ICS is to be able to handle users accessing or being served by different service domains, like for example to handle a user having a subscription in a packet-switched domain and being for example in a coverage of a circuit-switched domain. The ICS concept requires an installation of the so called ICS client application, preferably in the user's terminal and a provision of a packet-switched adapter, like for example the IMS adapter IA being placed between the circuit-switched domain and the IMS packet-switched domain. Users with the ICS client are IMS subscribers, wherein the supplementary and value added services are provided by the IMS domain and merely a basic circuit-switched subscription is provided to the users.

In 3GPP TSG SA WG2 Architecture, 28-30 March, 2006 in Munich, "USSD based call flows" a mechanism for attaching an IMS user via a legacy network is mentioned. It describes to use a Voice Call Continuity VCC application, for combining circuit-switched and packet-switched functionality. The VCC application is an IMS functionality located in an IMS node in the IMS domain. Further the document describes to use Unstructured Supplementary Service Data (USSD) in the circuit-switched domain for attaching an end terminal to the VCC application.

However in some case the ICS concept does not fulfill user's expectations. For example, when the subscriber roams with the ICS terminal into a CS domain, where the hosting operator has blocked USSD operations, the user is not able to access the packet-switched services. The same problem occurs when for example the ICS terminal has a malfunction which forces the subscriber to swap the SIM card into a terminal without ICS client support.

These situations yield to loosing the any packet-switched services in the packet-switched domain so that for example terminating calls can not be carried out.

### Summary

It is an object to provide a technique that realises a unified service domain. In particular it is object of the present invention to provide a solution for providing packet-switched services for a user having a circuit-switched access in a circuit-switched network.

The invention is embodied in independent claims. Advantageous embodiments are described in the dependent claims.

According to a first aspect of the invention, a method is proposed for providing packet-switched services of a packet-switched domain to a user with a circuit-switched capable terminal being located in a circuit-switched domain and having a circuit-switched access to said circuit-switched domain. Said user is registered in a packet-switched domain via the circuit-switched domain through a packet-switched control channel using a packet-switched adapter to access the packet-switched domain. In this situation, the packet-switched adapter detects the loss of the packet-switched control channel in the circuit-switched domain. There might be different reasons for loosing the packet-switched control connection. The aim of the present invention is to keep the registration in the packet switched domain alive as long as the user is reachable in order to provide the packet switched services to said user. In order to keep the registration in the packet-switched domain alive, at first it is to be determined whether a user is reachable. For this purpose, a tracking procedure is activated. In particular it is proposed to base the tracking procedure on the reception of mobility event notifications related to the terminal. There might be any suitable kind of mobility event notifications, like for example periodical location updates or attach/detach notifications. On the basis of the mobility event notifications, user's registration status may be determined.

Further it is proposed to align the registration in said packet-switched domain with said derived registration status by means of performing a registration procedure on behalf of the user in the packet-switched domain. Thus, in case a user is still reachable via a circuit-switched domain, the packet-switched adapter emulates as if said user were still accessible via a packet-switched control connection.

Another aspect of the present invention proposes to provide a packet-switched adapter adapted to communicate between a packet-switched domain and a circuit-switched domain for providing packet-switched services to a user located in the circuit-switched domain with a circuit-switched capable terminal wherein the user is adapted to register via the circuit-switched domain through a packet-switched control channel in the packet-switched domain for receiving the packet-switched service, and is adapted to access the packet-switched adapter. It is proposed that the packet-switched adapter comprises a detection logic adapted to detect the loss of the packet-switched control channel in the circuit-switched domain. Further a tracking logic is proposed which is adapted to perform a tracking procedure. The tracking logic comprises a receiver being adapted to receive mobility event notifications related to the circuit-switched capable terminal. Further the packet switched adapter comprises a mapping logic adapted to map the received mobility event notifications to a registration status of the user in the packet-switched domain. The mapping logic is connected to an aligning logic adapted to align the registration in said packet-switched domain with said derived registration status. The alignment is carried out by means of processor which is adapted to perform a registration procedure on behalf of the user in the packet-switched domain.

Further the adapter node is adapted to perform all steps as claimed in connection with the method which are to be performed in said node.

The advantage of the present invention is the transparency for some packet-switched services, since for the packet-switched service domain it remains transparent, that the subscriber is roaming in a circuit-switched domain. The packet-switched adapter performs the registration procedure using the parameters of the packet-switched service domain on behalf of the user.

A further advantage is that some packet-switched services, like the speech service, can be provided to a user being transferred to a packet-switched service domain but being suddenly accessible only via a circuit-switched access.

### Brief description of the drawings

Figure 1 is a block diagram illustrating embodiments of network; and
Figure 2 is a flowchart illustrating an embodiment of the method steps performed in a packet-switched adapter; and
Figure 3 is a schematic illustration of a network system in which the embodiments of the present invention are applicable; and
Figure 4 is a block diagram illustrating the embodiment of provision user's data; and
Figure 5 is a block diagram illustrating the embodiment of attaching a user to a network; and
Figure 6 is a block diagram illustrating the embodiment of registering a user in a packet-switched network over a circuit-switched access; and
Figures 7 to 9 are block diagrams illustrating the embodiments of the present invention.

### Detailed description

In the following preferred examples of the present invention shall be described in detail, in order to provide the skilled person with thorough and complete understanding of the invention, but these detailed embodiments only serve as examples of the invention and are not intended to be limiting.

It should be noted that the term "part", "node", or "logic" in the context of the present invention refers to any suitable combination of hardware and software for providing a predetermined functionality in the communication network. In this way, said terms generally refers to a logical entity that can be spread out over several physical entities of the network, but can also refer to a physical entity located in one physical location.

Preferably, the circuit-switched domain is a mobile communication network, e.g. a mobile communication network operating according to GSM, GPRS (General Packet-Switched Radio), UMTS (Universal Mobile Telephone System), LTE (Long Term Evolution) or any wireless system like for example EDGE, WCDMA, CDMA2000 or W-LAN.

Preferably, the packet-switched domain is an IMS domain, however this should not be seen as limitation; the present invention can also be practiced in other unified service domains different that encompassed by IMS.

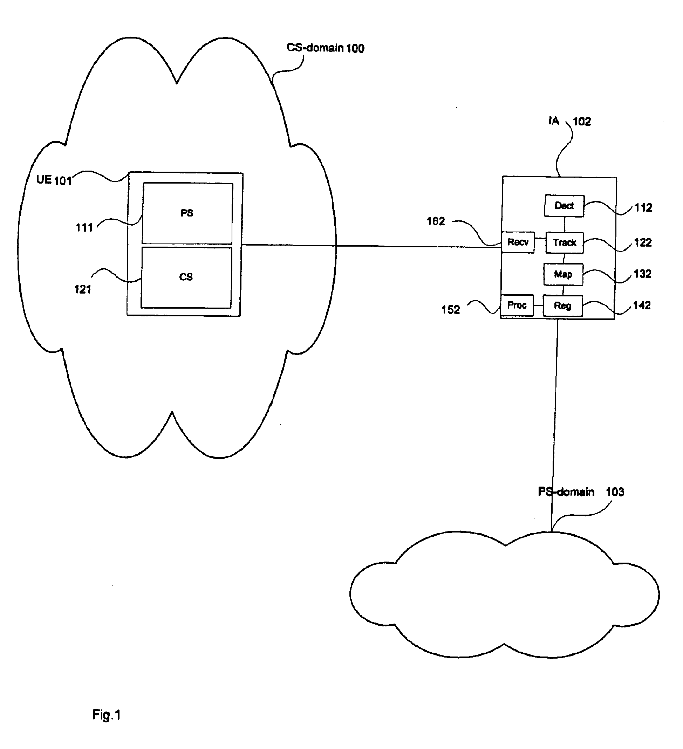

Fig. 1 depicts an embodiment of the invention in view of the system structure. According to Fig. 1 there is a user's terminal UE 101 located in a circuit-switched domain, CS-domain 100 and communicating with a packet-switched adapter IA 102 being further adapted to access the packet-switched domain, PS-domain 103.

According to Fig. 1 a user's terminal UE 101 has a circuit-switched functionality, CS 121 and a packet-switched functionality, PS 111. In one embodiment it is proposed to have one terminal with a PS functionality and a separate terminal with CS functionality and a user's card which might be swapped between the PS terminal to the CS terminal.

In the following description, the user's terminal is a circuit-switched capable terminal having circuit-switched functionality and being adapted to provide a communication between the terminal and the circuit-switched domain. Said terminal might have additionally also packet-switched functionality, the so-called ICS client. The terminal uses the packet-switched functionality, ICS client, to communicate with the packet-switched adapter, IA, in particular in order to register the user in the packet-switched domain. In a preferred embodiment the registration is performed over a circuit-switched domain, wherein for this purpose a packet-switched control connection, like an ICS connection, over a circuit-switched bearer, like for example the USSD bearer is used. In other embodiment the communication is based on a packet-switched protocol, like for example the IMS SIP protocol.

Further it is proposed to have a user of the terminal, wherein said user has a packet-switched subscription for the provision of packet-switched services. The packet-switched services might be any multimedia services, including audio and video services, further any supplementary and value added services as defined or feasible in IMS serve as examples but also pure voice services.

In one embodiment the information about the packet-switched services, the user is registered thereto, might be stored in a user's personal card, like for example in a SIM-card. Such user's card might be inserted into a terminal enhanced with a packet-switched functionality, ICS client. It might however occur that the user's personal card is swapped to a terminal only with a circuit-switched functionality. Thus the user is still registered in the packet-switched domain, although the terminal is not able to communicate over a packet-switched control connection with the packet-switched domain.

The present invention comes into play, when said packet-switched functionality, the ICS client, in a circuit-switched terminal is either currently not available or not usable, because of the network conditions although the user is subscribed to and registered in a packet-switched domain, IMS. In the following the term circuit-switched capable terminal will be used for a terminal with only circuit-switched functionality and for a terminal having both, the packet-switched and circuit-switched capability.

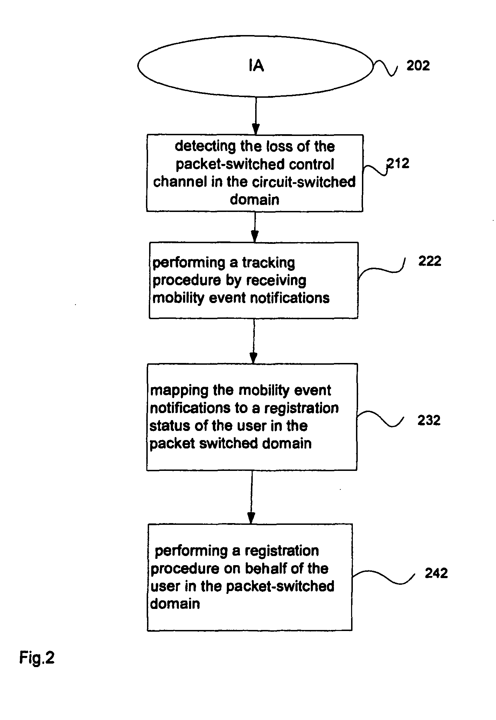

Returning to Fig.1, as becomes apparent, it comprises also a packet-switched adapter, IA 102. The packet-switched adapter might be either located in a circuit-switched domain or in the packet-switched service domain or on the boarder between both domains. The packet-switched adapter 102 comprises a detection logic, Dect 112 being adapted to perform the detection step for detecting the availability of a packet-switched control channel. The tracking logic, Track 122, is adapted to perform the tracking of the user's reachability. In particular the receiver Recv 162 is adapted to receive messages from the CS domain, like the mobility event notifications being used for the tracking purpose. The mapping logic, Map 132, is adapted to map the mobility event notification to the registration status of the user in the packet-switched domain. The registration logic, Reg. 142, is adapted to align the registration in the packet-switched domain to the derived registration status by means of the processor, Proc 152, being adapted to perform a registration procedure. The components of the IA 102 are connected with each other in a way to be able to perform the method steps according to Fig. 2.

The packet-switched adapter, IA 102 is further adapted to perform an adaptation between the circuit-switched domain and the packet-switched domain. One of the tasks is to perform protocol conversion between both domains. Further it comprises a user agent, which is some kind of a decision logic adapted to decide on behalf of the user. For example the user agent might collect information regarding the terminal capabilities in order to perform a suitable registration of said user in the packet-switched domain. Further the packet-switched adapter might have logic for administrating different addresses needed for routing calls to and/or from the user. It might include a gateway logic needed for accessing different domains. Further it is proposed that the packet-switched adapter is adapted to communicate with user's databases, for example in order to receive the user's correlated information.

Fig. 2 depicts the method steps according to one of the embodiments of the present invention. Preferably, the method is to be carried out in the packet-switched adapter, IA 202 and 102. In the first step, 212, it is detected that the packet-switched control channel in the circuit-switched domain does not exist anymore.

According to an aspect of the invention it is proposed that the registration in the packet-switched domain via a packet-switched control connection might be realised in any preferable and suitable way providing the adapter with the content necessary for the registration. For example it might be a SIP IMS registration message. According to the present invention said message might be defined in a packet-switched control protocol, like the ICS protocol which is to be packed in a circuit-switched transport bearer such as USSD having the advantage that the complete information is provided to the domain adapter.

According to an aspect of the invention it is proposed that the detecting step whether the user is accessible via the circuit-switched terminal over the circuit-switched domain might be realized in any preferable and suitable way. In one embodiment it is proposed to check a reception of a re-registration message from the user. A user which is registered in a packet-switched domain sends periodically so-called re-registration messages to the packet-switched domain, in order to inform said domain, that the user is still available and ready for receiving packet-switched services. In a preferred embodiment the packet-switched adapter IA has a running registration timer and if said timer expires before receiving a re-registration message, it is assumed that the user is not reachable via the packet-switched control connection.

Returning to Fig. 2, in the next step, 222, it is proposed to perform a tracking procedure in order to determine whether the user is still reachable. The tracking procedure comprises the reception of mobility event notifications, which are foreseen to report periodically about user's reachability and to notify about changes in respect of the user's availability.

The mobility events notification might be realised in any preferable and suitable way. In a preferred embodiment the CAMEL approach is taken as an example however it has no restriction to the present invention. In particular in networks without the CAMEL functionality, it is proposed to implement any suitable trigger message.

CAMEL is a network feature which allows the network operator to provide the mobile subscribers with the operator specific services even when mobile subscribers are roaming outside the home network. In the frame of CAMEL, a so called Trigger Detection Point (TDP) is defined, which specifies a point of time in transaction handling. The Mobility Trigger Point is an example of the TDP informing about mobility events and changes, for example a Mobility Trigger might have as parameters an attach, detach, location update or periodic location update event.

In one embodiment the provision of the of mobility event notifications is activated per default, which results that all mobility events notification are sent automatically to the packet-switched adapter. By this the packet-switched adapter can keep track on the reachability state of the user. The advantage of this approach is that the packet-switched adapter does not need to be active in order to get the information since it is informed per default about the user's status.

In another embodiment the provision of the mobility triggers notification is not activated per default, but it has to be activated. For this purpose at first a request for checking reachability of the user is sent out in order to check the first status of the user and in order to activate in a further step the provisioning of the notifications. The advantage of this embodiment is that the network resources are saved since the pooling of the user for the status is done when it is detected that the user is not reachable via the packet-switched control connection.

In one embodiment it is proposed to send a standardised circuit-switched request towards a user's database for retrieving a user's state in order to check the reachability of the user. The standardised circuit-switched request might be for example a MAP Any Time Interrogation message. In a telecommunication network, service related messages are transported over different communication links via a corresponding protocol. For example in GSM between the terminal and the MSC the Direct Transfer Application Part (DTAP) transport protocol is defined. Further between the MSC and HLR a so called Mobile Application Part (MAP) protocol is standardized and this protocol might be also used for transporting specific service commands like the Any Time Interrogation message from the packet-switched adapter, IA to the HLR to query the HLR for position information of a user. The HLR responds by providing the adequate information.

Since the packet-switched adapter is a new concept, there are no standardized interfaces, therefore it is proposed in another embodiment to use a proprietary implemented user's state query for getting the user's state. This might for example be a service interface based on a PARLEY mechanism, like the OSA/Parley/Parley-X User Status interface provided by the circuit-switched domain to determine the registration state of a subscriber.

In case the checking step yields that the user is reachable, the packet-switched adapter IA activates the provisioning of mobility trigger notifications in order to be periodically updated or when the status changes. In a preferred embodiment a MAP Any Time Modification is sent by the packet-switched adapter IA to the HLR to activate the provisioning of mobility trigger notifications for the subscriber.

In case the result of the checking procedure is that the user's state is not-reachable, it is proposed that the packet-switched adapter IA periodically re-checks the user's state. It might namely happen that the user is in a not-reachable branch when the re-registration timer expires, but after checking again the result might be that the user is available again.

Returning to Fig. 2, in step 232, it is proposed to map the received mobility event notifications to a registration status of the user in the packet-switched domain. In a preferred embodiment a MSC reports any detach, attach or location update event (including periodic location updates) by means of a Mobility Trigger Notification to the packet-switched adapter, IA, which is adapted to map these events to an IMS registration status of the user. The registration status might be that the user is already registered and a re-registration is necessary, or that the user is to be registered or de-registered.

In a subsequent step 242 of Fig.2, it is proposed to align the registration status in the packet-switched domain on behalf of the user depending on the registration status in said packet-switched domain. The appropriate registration procedure might be re-registration if a periodic location update or a normal location update notification is received, which implies that the user is still reachable, or it might be registration if an attach notification is received which means that the user is available again, or it might be a de-registration procedure if a detach notification is received, which means that the user is not reachable anymore.

Further it is proposed that the packet-switched adapter abandons the performing of the registration procedure on behalf of the user when it detects that the user is accessible via a packet-switched based connection. This might for example happen when the user swaps back the SIM card into a terminal with a packet-based functionality.

In particular in case when the reporting of the mobility event notifications has been actively initiated, it is proposed that the packet-switched adapter requests termination of provisioning of mobility event notifications related to the user's terminal and deactivates the procedure for receiving said notifications. This might be realized in any preferable and suitable way. One way might be to send a MAP Any Time Modification to the user's database for deactivation of the Mobility Event Notifications, like in this case to the HLR.

Preferably, the Session Initiation Protocol SIP can be used as an embodiment of a protocol for transporting a registration message in the IMS. SIP is a signaling protocol used between the IMS user's equipment UE and the IMS as well as between the components within the IMS. The IMS uses SIP also to complete voice and multimedia calls.

In the following presented embodiments GSM or UMTS are examples for the circuit-switched domain, the IMS is taken as an example for a packet-switched domain. The centric approach of IMS (ICS) is taken as an example for packet-switched control access, wherein a packet-switched functionality in a terminal is realized by means of an ICS client implemented in the terminal. IMS adapter IA might serve as an embodiment for a packet-switched adapter. The IA might be a stand-alone node or it might be integrated in any suitable node and be located in any suitable domain.

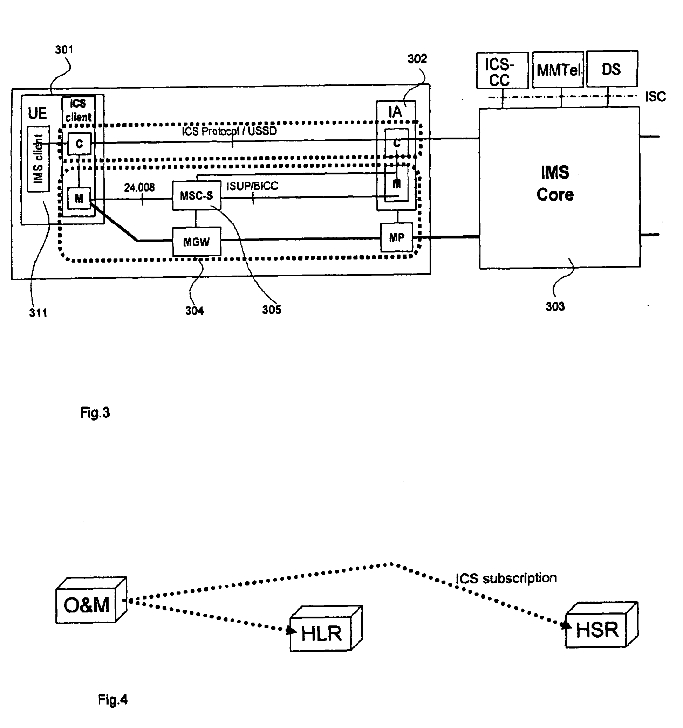

The network system of Fig. 3 shows a terminal 301, UE, comprising an IMS client 311. MSC-S 305 and Media Gateway (MGW) 304 are additionally included in the system and are responsible for providing signaling and the corresponding payload connectivity. Further there is an IMS adapter IA 302 performing registration procedure on behalf of the terminal 301 in the IMS core network 303. The ICS client includes two main functional components reflecting the layered architecture of the network system of Fig. 3. On a control layer, the ICS client includes a functional block "C" for session control handling. On the payload layer, the ICS client includes a functional block "M" for media connectivity handling. The individual functional blocks of the ICS client 301 communicate with the corresponding functional blocks in the IA 302 node. Communication on the control layer involves an appropriate control protocol, which in Fig. 3 is the ICS protocol over USSD. Further example might be also a SIP protocol, or any other appropriate control protocol. The communication on the payload layer involves protocols according to the 3GPP technical specification 24.008 with protocols like ISUP/BICC/SIP-I.

As shown in Fig. 3, the IMS 303 includes IMS core as well as IMS application Servers (such as Multimedia Telephony (MMTEL) Server or Voice Call Continuity (ICS CC) and Domain Selection Server (DS)). The IMS core and the IMS application services communicate via an ISC interface.

The network according to Fig. 3 might be configured to perform present invention and in particular the adapter node IA 302 might be configured to perform the method embodiment according to Fig. 2.

Fig. 4 depicts the provisioning of subscriber data. The O&M is a central entity; it might be for example an operation and maintenance centre of an operator, which provides the data to the different databases. According to Fig. 3 the HLR and the HSS are the databases which receive subscriber data, preferably in advance, before the user starts using the network connections.

There are different user data which are to be distributed in the network. It is for example proposed that the HLR contains a basic CS subscription related to the speech service. Additional subscriptions may be added depending if these shall be executed in the CS domain on behalf of an IMS Service Engine. Further the HLR might include CAMEL data that causes that all originating calls are routed to the IA. However CAMEL is only one example for fetching a roaming number from the IA, further example might be to use USSD for that purpose. In the following the CAMEL approach is used as a preferred embodiment.

It is further proposed that the HLR comprises CAMEL data for providing CAMEL mobility triggers as an embodiment of mobility event notification. According to the embodiments of the invention, said mobility event notifications might be marked either as activated or as de-activated per default. The preferred option might depend on the assumptions of an operator. For example it is to be expected that the operator when using ICS approach provides also ICS capable terminals to the users having consequently an ICS subscription. In this case the default setting of the CAMEL mobility triggers can be de-activated, since the ICS client in the terminal takes care of IMS registration handling whenever a re-registration event from the user is received. However, if the operator allows using non-ICS terminals, then the default setting of the CAMEL mobility triggers might be preferably set to activated in order to always inform the IA about changes of the user's reachability.

In one embodiment it is further proposed that also the HSR located in the IMS contains subscriber data. According to Fig.4 the O&M entity provides said data to the HSR, wherein the user data depends on the implemented solution. In one embodiment it is proposed to provide IMS related subscription information, which might be for example requested by the packet-switched adapter during a registration procedure.

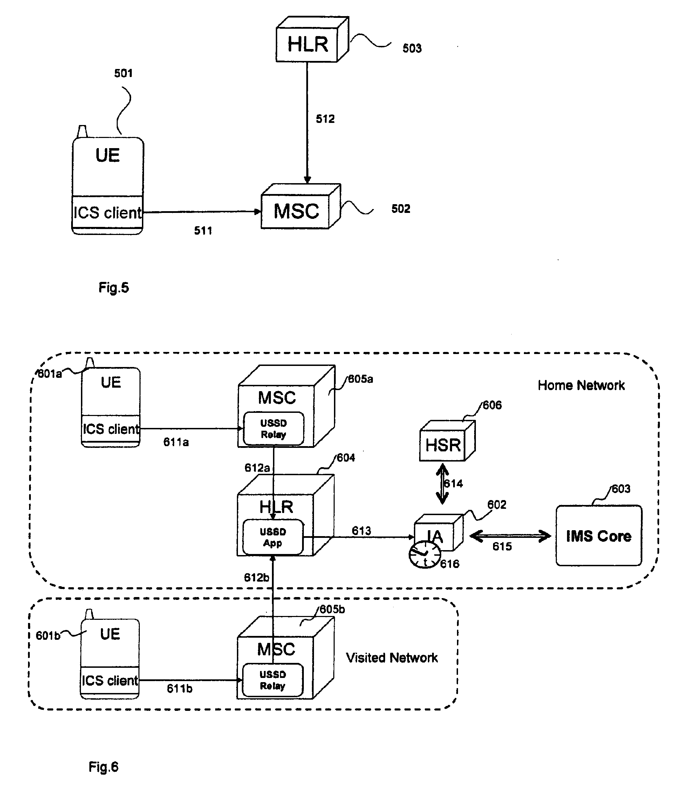

In the following the registration of a user in a packet-switched domain over a packet-switched control channel is described in more details in respect to Fig.5.

Initially, when a user switches on the terminal an attach message is sent out through the network. The attach procedure is depicted in Fig.5 showing a terminal 501 and an MSC 502 and a HLR 503. The attach message 511 is sent to the MSC 502, which upon reception of the attach message requests from the HLR further subscriber subscription data. Said data is provided with the message 512 to the MSC. In a preferred example the MAP protocol might be used to insert the required data to the MSC, which might be for example information that the CAMEL mobility triggers are set as de-activated per default. Further the basic CS speech service subscription (TS11/TS12) and the CAMEL call routing triggers might also be provided,. The subscriber data is needed inter alia to perform the tracking procedure in particular in order to receive mobility event notifications related to the circuit-switched capable terminal. Independent of the provision of the different subscriber data, the result of the attach procedure is that the user is attached to the circuit-switched domain. Subsequently, since the terminal has the packet-switched functionality, the ICS client, said client starts to trigger registration of the user in the packet-switched domain over the established circuit-switched bearer.

The registration procedure is described in the following in relation to Fig.6, wherein an embodiment is presented with an ICS client performing an IMS registration in the IMS over USSD. Thus according to Fig. 6, there is a first user UE 601a being located in a home domain and communicating with a first MSC, 605a and a second user UE 601b being located in a visited network and communicating with a second MSC, 605b. Both MSC are connected to an HLR 604 which provides on the other side a connection to a packet-switched adapter IA, 602. The packet-switched adapter is adapted to provide an access to the IMS network 603. Further the packet-switched adapter has a connection, 614, to an HSR database, 606.

After attaching to a CS network, the user's UE, independent whether it is located in a home or in a visited network, sends a registration message, 611a and 611b. In a preferred embodiment it is an ICS registration message defined in the ICS protocol, wherein said message is packed in a USSD message. The transport protocol used on the link between a terminal and a MSC is the DTAP protocol. Consequently the IMS registration packed according to the available protocols is sent to the corresponding MSC, 605a and 605b. The MSCs have a USSD Relay logic which is adapted to interpret the received USSD message and to process them. According to Fig. 6 the USSD messages are packed into a MAP protocol being available on the interface between the MSC and the HLR and are forwarded to the HLR, 612a, 612b. Upon reception of the messages the HLR forwards them, 613 to the packet-switched adapter IA, 602. The forwarding might be performed in any suitable way. It is proposed to use the ICS protocol for the forwarding purpose, since the interface between the HLR and the IA is not defined yet. Preferably the IA verifies the ICS subscription in the HSR, 614 and if the verification yields in a positive result, the registration is forwarded to the IMS, 615. After successful IMS registration, the IA starts a timer, 616, to supervise when a re-registration is needed in order to keep the IMS registration alive. The result of the above described procedure is that the user is registered in IMS for receiving the IMS services, wherein the registration is performed in the circuit-switched domain through the ICS channel over USSD bearer. General speaking the user is registered in a packet-switched domain through a packet-switched control channel over a circuit-switched transport bearer.

In the following the embodiment is described when a user loses the connectivity through the packet-switched control channel. This might occur for example when a roaming operator decides not to support the packet-switched control channel over USSD or after a SIM swap.

In case a SIM-swap takes place, the new terminal, without the ICS client, performs a standard IMSI attach at power-up procedure and as an effect thereof the MSC is notified, however the information is not spread out to other nodes within the system. However, although the packet-switched control channel does not exist, the IMS registration may still be alive and the re-registration timer in the IA may still be running. Therefore, since there is no ICS client on the terminal anymore and therefore no packet-switched control channel available anymore, the present invention proposes that the packet-switched adapter handles on behalf of the user, in particular that the terminal performs a registration procedure in the packet-switched domain.

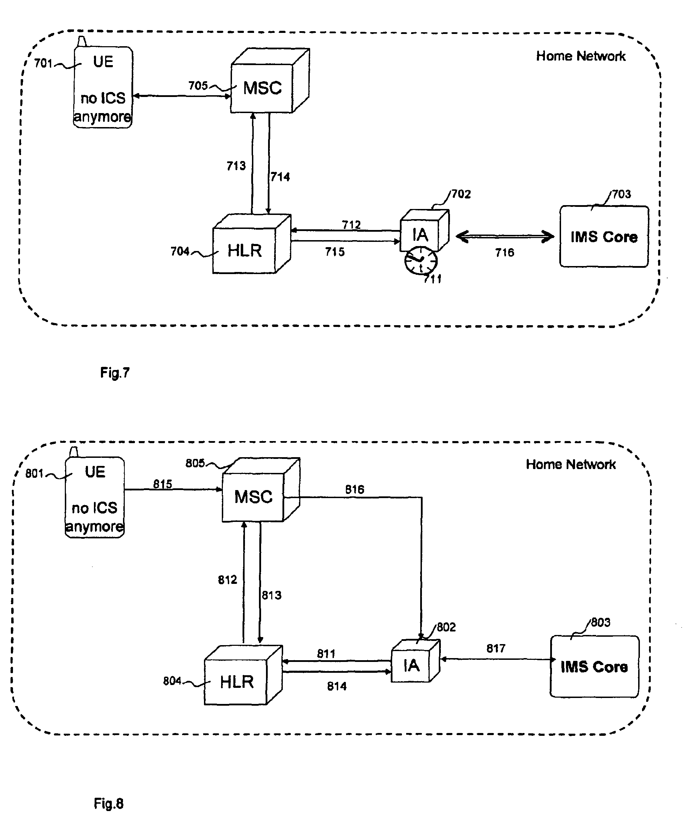

In respect to Fig.7 the initiation of the registration procedure is described in more details. According to Fig. 7, there is a terminal UE 701 communicating via a MSC, 705 with the HLR 704. The HLR 704 is connected on the other side with the packet-switched adapter LA, 702. The packet-switched adapter LA is adapted to provide an access to the IMS network 703.

In a first step, 711, the IA detects that the re-registration timer expires since no re-registration message has been received from the user. In the next phase it is to be determined whether the user is still reachable. The information about user's reachability might be available already, for example when the CAMEL mobility triggers are activated per default at provisioning of subscriber data in HLR. In this case no further actions are needed in the IA to check user's availability. Otherwise it is proposed that the IA activates the provisioning of the mobility event notifications but at the first stage the IA should determine the user's state. This might be performed in any suitable way. In one embodiment it is proposed to that the packet-switched adapter IA uses the standardized procedures for this. For example, MAP Any Time Interrogation message is sent towards the HLR, 712. The HLR requests the state from the serving VLR using standard MAP Provide Subscriber Information procedure, 713. The VLR checks the subscriber state and returns either reachable or not-reachable as a result, 714, which is then returned to the requesting IA, 715.

In another embodiment, not shown in Fig.7, it is proposed that the IA uses an OSA/Parlay/Parlay-X User Status service interface provided by the CS domain to determine the state of the subscriber.

Consequently the result of the subscriber state query is received in the IA. Depending on the state of the subscriber the IA can take different actions. If the subscriber is not-reachable, the IA either does not take any action and the IMS registration timer expires, or the IA can actively de-register the subscriber from IMS. In any case the IA keeps track on the state of the subscriber in order to take appropriate action by using appropriate registration procedures as soon as the user becomes reachable again. The checking of the user's availability might be performed in any suitable way. It is proposed that the IA permanently polls the subscriber state, or the IA activates the Mobility Triggers in order to be informed of an attach event of the subscriber's terminal.

In case the result of the user's state is that the user is available, and due to the fact that no re-registration via USSD took place, the IA starts the registration procedure on behalf of the user and restarts the re-registration timer. The effect of the registration procedure is that the packet-switched registration is bound to the circuit-switched attach status.

Additionally, since the user is reachable, the IA activates also the provisioning of CAMEL mobility triggers, as an example of the mobility event notifications. The activation procedure is presented in the following in respect to Fig.8. According to Fig.8 the same nodes as in the aforementioned figures are depicted, a MSC 805, HLR 804, IA 802 und IMS core 803 and a user's terminal without the ICS client, 801.

In step 811 the IA initiates the standardized MAP Any Time Modification procedure towards HLR to activate the CAMEL Mobility Triggers. Since on the interface between HLR and IA the MAP protocol is used, it is preferable to use this protocol to send the MAP Any Time Modification message. The HLR translates the received message into the standard MAP Insert Subscriber Data to change the VLR subscriber data accordingly. This message is sent to MSC in step 812, and the result whether it has been activated or not, is forwarded to the HLR in message 813. In case the Mobility Triggers have been successfully activated, the HLR forwards the result to IA, step 814.

The outcome of the activation procedure is that attach, detach and/or location update (including periodic location update) events are reported from the serving MSC to the IA. For example in case of changing the location area, the user's terminal 801, sends in step 815 a location update message to MSC. The location update message might be sent by means of the DTAP protocol being available on the UE-MSC interface, DTAP: Location Update. This triggers in the MSC the related mobility detection point and the MSC sends a corresponding mobility event notification, which is directed to the IA. In the present embodiment the MSC might send a MAP: Note-MM-Event message, 816 as a carrier of a CAMEL Mobility Trigger Notification. The IA maps the received mobility event notification to the corresponding registration status. In this embodiment, apparently the user is still available, and therefore the IA aligns the subscription status in the IMS by performing a re-registration procedure towards the IMS, 803 at the next expiry of the re-registration timer.

In other embodiment the user's terminal might send an attach message to the MSC, 815, which initiates a CAMEL Attach Notification as a Trigger towards the IA, 816. It is proposed that the IA upon reception of this message recognizes that the status of the user is reachable and therefore a registration of the user in the IMS domain is performed. Additionally a re-registration timer is started.

In a further embodiment the user's terminal might send a detach message, 815, being translated in the MSC into CAMEL detach notification, 816, which is mapped in the IA into a status that the user is not reachable anymore and consequently a de-registration procedure of the user in the IMS is performed and the re-registration timer is stopped.

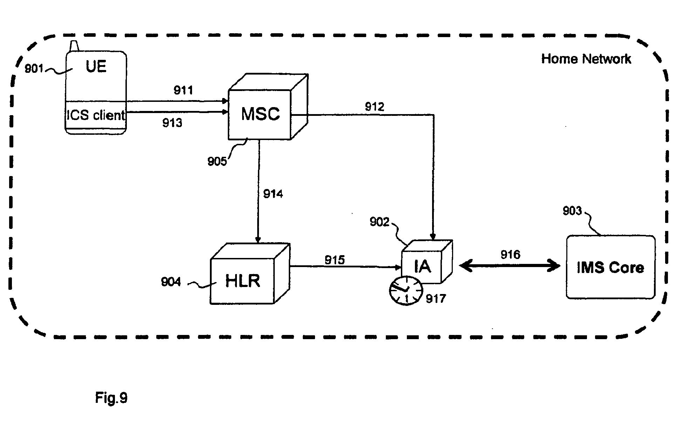

In another embodiment it is proposed to provide a procedure when the user swaps back the SIM card to a packet-switched capable terminal. In the following an embodiment is presented with reference to Fig. 9. According to Fig.9 the following nodes are depicted: a user's terminal with the ICS client, 901, an MSC 905, HLR 904, IA 902 und IMS core 903.

After swapping back the SIM card into a ICS capable terminal, a DTAP: IMSI attach message is send from the user's terminal to the MSC, 911, whereupon the MSC sends a CAMEL Mobility notification, MAP: Note-MM-Event, 912 to the IA. After the attachment to the network is completed, the ICS client on the terminal starts a IMS Registration over USSD, thus a DTAP (USSD)"ICS Registration" message is sent, 913 to the MSC, which forwards said message as MAP(USSD) message in step 914 to the HLR and using the ICS protocol in step 915 to the IA. Due to the fact that an IMS Registration request is received from the terminal via USSD, this indicates to the IA that the user is accessible in the circuit-switched domain via a packet-switched connection over a circuit-switched bearer, ICS over USSD. Consequently, the IA performs a re-registration of the user in the IMS, 916 and starts the re-registration timer, 917, upon reception of the re-registration message from the user. Further the fact that the user is connected via ICS over USSD leads to the conclusion that the CAMEL Mobility triggers, if activated are not longer needed and therefore it is proposed that the IA deactivates said triggers.

The deactivation procedure of the mobility event notifications is not shown in any figure. It is proposed that the IA sends a MAP: Any Time Modification with CAMEL Mobility Trigger deactivate as a parameter to the HLR. The HLR translates the received message into a MAP: Insert Subscriber Data and sends it to the VLR by means of the CAMEL Mobility Trigger deactivate message. The result of the deactivation is sent back to the IA via HLR.

Although embodiments of the present invention have been illustrated in the accompanying drawings and described in the description, it will be understood that the invention is not limited to the embodiment disclosed herein. In particular it is to be emphasized that the ICS over USSD is one example of implementing a packet-switched control channel.

## Claims

1. Method for providing packet-switched services to a user in a circuit-switched domain with a circuit-switched capable terminal wherein the user is registered via the circuit-switched domain through a packet-switched control channel in a packet-switched domain for receiving the packet-switched service, using a packet-switched adapter to access the packet-switched domain, with the following steps,
- detecting the loss of the packet-switched control channel in the circuit-switched domain and,
- performing a tracking procedure by receiving mobility event notifications related to the circuit-switched capable terminal and,
- mapping the mobility event notifications to a registration status of the user in the packet-switched domain and,
- aligning the registration in said packet-switched domain with said derived registration status by means of performing a registration procedure on behalf of the user in the packet-switched domain.

2. Method according to claim 1 wherein the detecting step is realised by means of checking a reception of a re-registration message from the circuit-switched capable terminal.

3. Method according to claim 1 wherein the tracking procedure comprises reception of mobility event notifications related to the circuit-switched capable terminal.

4. Method according to claim 1 wherein the tracking procedure comprises checking reachability of the user and activating reception of the mobility event notifications.

5. Method according to claim 4 wherein the checking the reachability of the user comprises that the packet-switched adapter sends a standardised circuit-switched request towards a user's database for retrieving a user's state.

6. Method according to claim 4 wherein the checking the reachability of the user comprises that the packet-switched adapter initiates a proprietary implemented user's state query for getting a user's state.

7. Method according to one of the claims 4 to 6 wherein in case the user's state is reachable, the packet-switched adapter activates in the user's database the delivery of said notifications.

8. Method according to one of the claims 1 to 7 wherein the mobility events are at least one of detach notification or attach notification or location update notification.

9. Method according to one of the claims 4 to 6 wherein in case the user's state is not-reachable, the packet-switched adapter periodically re-checks the user's state until the user's state is found reachable.

10. Method according to claim 1 wherein the registration procedure is de-registration, registration or re-registration procedure.

11. Method according to claim 1 wherein the packet-switched adapter abandons the performing of the re-registration procedure on behalf of the user when detecting that the user is accessible via a packet-switched based connection.

12. Method according to claim 11, wherein the packet-switched adapter deactivates in the user's database the delivery of said notifications related to the user's terminal and deactivates said tracking procedure.

13. Packet-switched adapter adapted to communicate between a packet-switched domain and a circuit-switched domain for providing packet-switched services to a user located in the circuit-switched domain with a circuit-switched capable terminal wherein the user is adapted to register via the circuit-switched domain through a packet-switched control channel in the packet-switched domain for receiving the packet-switched service, and is adapted to access the packet-switched adapter with
- a detection logic adapted to detect the loss of the packet-switched control channel in the circuit-switched domain and,
- a tracking logic adapted to perform a tracking procedure and comprising a receiver being adapted to receive mobility event notifications related to the circuit-switched capable terminal and,
- a mapping logic adapted to map the mobility event notifications to a registration status of the user in the packet-switched domain and,
- aligning logic adapted to align the registration in said packet-switched domain with said derived registration status by means of a processor adapted to perform a registration procedure on behalf of the user in the packet-switched domain.

## Patentansprüche

1. Verfahren zur Bereitstellung von paketvermittelten Diensten für einen Benutzer in einem leitungsvermittelten Bereich mit einem leitungsvermittlungsfähigen Endgerät, wobei der Benutzer über den leitungsvermittelten Bereich durch einen paketvermittelten Steuerkanal in einem paketvermittelten Bereich zum Empfangen des paketvermittelten Dienstes registriert ist, unter Verwendung eines paketvermittelten Adapters zum Zugriff auf den paketvermittelten Bereich mit den folgenden Schritten:
- Erkennen des Verlusts des paketvermittelten Steuerkanals im leitungsvermittelten Bereich, und
- Durchführen einer Nachverfolgungsprozedur durch Empfangen von Mobilitätsereignisbenachrichtigungen in Bezug auf das leitungsvermittlungsfähige Endgerät, und
- Zuordnen der Mobilitätsereignisbenachrichtigungen zu einem Registrierungsstatus des Benutzers im paketvermittelten Bereich, und
- Abstimmen der Registrierung im paketvermittelten Bereich mit dem abgeleiteten Registrierungsstatus durch Durchführen einer Registrierungsprozedur im Namen des Benutzers im paketvermittelten Bereich.

2. Verfahren nach Anspruch 1, wobei der Erkennungsschritt durch Prüfen eines Empfangs einer Re-registrierungsnachricht vom leitungsvermittlungsfähigen Endgerät ausgeführt wird.

3. Verfahren nach Anspruch 1, wobei die Nachverfolgungsprozedur einen Empfang von Mobilitätsereignisbenachrichtigungen in Bezug auf das leitungsvermittlungsfähigen Endgerät umfasst.

4. Verfahren nach Anspruch 1, wobei die Nachverfolgungsprozedur ein Prüfen einer Erreichbarkeit des Benutzers und Aktivieren eines Empfangs der Mobilitätsereignisbenachrichtigungen umfasst.

5. Verfahren nach Anspruch 4, wobei das Prüfen der Erreichbarkeit des Benutzer umfasst, dass der paketvermittelte Adapter eine leitungsvermittelte Standardanforderung an eine Datenbank des Benutzers zum Abrufen eines Status des Benutzers umfasst.

6. Verfahren nach Anspruch 4, wobei das Prüfen der Erreichbarkeit des Benutzers umfasst, dass der leitungsvermittelte Adapter eine proprietäre implementierte Statusabfrage zum Einholen eines Benutzerstatus einleitet.

7. Verfahren nach einem der Ansprüche 4 bis 6, wobei, falls der Benutzerstatus erreichbar ist, der paketvermittelte Adapter in der Datenbank des Benutzers die Zustellung der Benachrichtigungen aktiviert.

8. Verfahren nach einem der Ansprüche 1 bis 7, wobei es sich bei den Mobilitätsereignissen um mindestens eine von einer Trennungsbenachrichtigung oder einer Anschlussbenachrichtigung oder einer Aufenthaltsaktualisierungsbenachrichtigung handelt.

9. Verfahren nach einem der Ansprüche 4 bis 6, wobei, falls der Benutzerstatus nicht erreichbar ist, der paketvermittelte Adapter den Benutzerstatus periodisch erneut prüft, bis festgestellt wird, dass der Benutzerstatus erreichbar ist.

10. Verfahren nach Anspruch 1, wobei die Registrierungsprozedur eine Deregistrierungs-, Registrierungs- oder Neuregistrierungsprozedur ist.

11. Verfahren nach Anspruch 1, wobei der paketvermittelte Adapter das Durchführen der Re-registrierungsprozedur im Namen des Benutzers aufgibt, wenn er erkennt, dass der Benutzer über eine paketvermittlungsbasierte Verbindung erreichbar ist.

12. Verfahren nach Anspruch 11, wobei der paketvermittelte Adapter in der Datenbank des Benutzers die Zustellung der Benachrichtigungen in Bezug auf das Benutzerendgerät deaktiviert und die Nachverfolgungsprozedur deaktiviert.

13. Paketvermittelter Adapter, der so ausgelegt ist, dass er zwischen einem paketvermittelten Bereich und einem leitungsvermittelten Bereich zum Bereitstellen von paketvermittelten Diensten für einen Benutzer mit einem leitungsvermittlungsfähigen Endgerät, der sich im leitungsvermittelten Bereich befindet, kommuniziert, wobei sich der Benutzer über den leitungsvermittelten Bereich durch einen paketvermittelten Steuerkanal im paketvermittelten Bereich zum Empfangen des paketvermittelten Dienstes registrieren kann und auf den paketvermittelten Adapter zugreifen kann mit:
- einer Erkennungslogik, die so ausgelegt ist, dass sie den Verlust des paketvermittelten Steuerkanals im leitungsvermittelten Bereich erkennt, und
- einer Nachverfolgungslogik, die so ausgelegt ist, dass sie eine Nachverfolgungsprozedur durchführt, und einen Empfänger umfasst, der so ausgelegt ist, dass er Mobilitätsereignisbenachrichtigungen in Bezug auf das leitungsvermittlungsfähige Endgerät empfängt, und
- einer Zuordnungslogik, die so ausgelegt ist, dass sie die Mobilitätsereignisbenachrichtigungen zu einem Registrierungsstatus des Benutzers im paketvermittelten Bereich zuordnet, und
- einer Abstimmlogik, die so ausgelegt ist, dass sie die Registrierung im paketvermittelten Bereich mit dem abgeleiteten Registrierungsstatus mithilfe eines Prozessors abstimmt, der so ausgelegt ist, dass er eine Registrierungsprozedur im Namen des Benutzers im paketvermittelten Bereich durchführt.

## Revendications

1. Procédé de fourniture de services à commutation de paquets à un utilisateur dans un domaine à commutation de circuits avec un terminal apte à la commutation de circuits dans lequel l'utilisateur est enregistré via le domaine à commutation de circuits par l'intermédiaire d'un canal de commande à commutation de paquets dans un domaine à commutation de paquets pour recevoir le service à commutation de paquets, en utilisant un adaptateur à commutation de paquets pour accéder au domaine à commutation de paquets, avec les étapes suivantes consistant à :
- détecter la perte du canal de commande à commutation de paquets dans le domaine à commutation de circuits et
- exécuter une procédure de suivi en recevant des notifications d'évènement de mobilité relatives au terminal apte à la commutation de circuits et
- mettre en correspondance les notifications d'évènement de mobilité avec un statut d'enregistrement de l'utilisateur dans le domaine à commutation de paquets et
- aligner l'enregistrement dans ledit domaine à commutation de paquets avec ledit statut d'enregistrement déduit au moyen de l'exécution d'une procédure d'enregistrement pour le compte de l'utilisateur dans le domaine à commutation de paquets.

2. Procédé selon la revendication 1, dans lequel l'étape de détection est réalisée au moyen de la vérification d'une réception d'un message de réenregistrement provenant du terminal apte à la commutation de circuits.

3. Procédé selon la revendication 1, dans lequel la procédure de suivi comprend la réception de notifications d'évènements de mobilité relatifs au terminal apte à la commutation de circuits.

4. Procédé selon la revendication 1, dans lequel la procédure de suivi comprend de vérifier la joignabilité de l'utilisateur et l'activation de la réception des notifications d'évènement de mobilité.

5. Procédé selon la revendication 4, dans lequel la vérification de la joignabilité de l'utilisateur comprend que l'adaptateur à commutation de paquets envoie une demande de commutation de circuits normalisée vers une base de données d'utilisateur pour extraire un état d'utilisateur.

6. Procédé selon la revendication 4, dans lequel la vérification de la joignabilité de l'utilisateur comprend que l'adaptateur à commutation de paquets amorce une interrogation d'état d'utilisateur implémentée par le propriétaire pour obtenir un état d'utilisateur.

7. Procédé selon une des revendications 4 à 6, dans lequel au cas où l'état d'utilisateur est joignable, l'adaptateur à commutation de paquets active dans la base de données d'utilisateur la remise desdits notifications.

8. Procédé selon une des revendications 1 à 7, dans lequel les évènements de mobilité sont au moins un d'une notification de détachement ou une notification de rattachement ou une notification de mise à jour de position.

9. Procédé selon une des revendications 4 à 6, dans lequel au cas où l'état d'utilisateur n'est pas joignable, l'adaptateur à commutation de paquets vérifie à nouveau périodiquement l'état d'utilisateur jusqu'à ce que l'état d'utilisateur s'avère joignable.

10. Procédé selon la revendication 1, dans lequel la procédure d'enregistrement est une procédure de désenregistrement, enregistrement ou réenregistrement.

11. Procédé selon la revendication 1, dans lequel l'adaptateur à commutation de paquets abandonne l'exécution de la procédure de réenregistrement pour le compte de l'utilisateur quand il détecte que l'utilisateur est accessible via une connexion basée sur commutation de paquets.

12. Procédé selon la revendication 11, dans lequel l'adaptateur à commutation de paquets désactive dans la base de données d'utilisateur la remise de ladite notification relative au terminal d'utilisateur et désactive ladite procédure de suivi.

13. Adaptateur à commutation de paquets adapté afin de communiquer entre un domaine à commutation de paquets et un domaine à commutation de circuits pour fournir des services à commutation de paquets à un utilisateur situé dans le domaine à commutation de circuits avec un terminal apte à la commutation de circuits dans lequel l'utilisateur est adapté afin de s'enregistrer via le domaine à commutation de circuits par l'intermédiaire d'un canal de commande à commutation de paquets dans le domaine à commutation de paquets pour recevoir le service à commutation de paquets et est adapté pour accéder à l'adaptateur à commutation de paquets avec :
- une logique de détection adaptée afin de détecter la perte du canal de commande à commutation de paquets dans le domaine à commutation de circuits et
- une logique de suivi adaptée afin d'exécuter une procédure de suivi et comprenant un récepteur étant adapté pour recevoir des notifications d'évènement de mobilité relatives au terminal apte à la commutation de circuits et
- une logique de mise en correspondance adaptée pour mettre en correspondance les notifications d'évènement de mobilité avec un statut d'enregistrement de l'utilisateur dans le domaine à commutation de paquets et
- aligner une logique adaptée afin d'aligner l'enregistrement dans ledit domaine à commutation de paquets avec ledit statut d'enregistrement déduit au moyen d'un processeur adapté pour exécuter une procédure d'enregistrement pour le compte de l'utilisateur dans le domaine à commutation de paquets.
